# EUROPÄISCHE PATENTANMELDUNG

(11) **EP 4 752 916 A1**
(43) Veröffentlichungstag der Anmeldung: **03.06.2026**
(21) Anmeldenummer: 25216859.6
(22) Anmeldetag: 19.11.2025
(51) Int. Cl.: H01F 27/02, H01F 27/04, H01F 27/36, H02B 1/52

(54) **TRENNTRANSFORMATORVORRICHTUNG**

(30) Priorität: 28.11.2024 DE 102024135203
(71) Anmelder: Norrenbrock Technik GmbH & Co. KG, 26607 Aurich (DE)
(72) Erfinder: Norrenbrock, Robert, 26736 Krummhörn (DE); Reiter, Daniel, 26632 Ihlow (DE)
(74) Vertreter: Eisenführ Speiser

(57) **Zusammenfassung**

Die Erfindung betrifft eine Trenntransformatorvorrichtung 100 für ortsveränderliche transportable Baueinheiten 600, insbesondere mobile Container, wobei die Trenntransformatorvorrichtung 100 aufweist: einen Trenntransformator 200, wobei der Trenntransformator umfasst: eine Primärverteilungseinheit 210, wobei die Primärverteilungseinheit eine Primärverteilung 211 und ein Primärverteilungsgehäuse 212 aufweist, wobei die Primärverteilung in dem Primärverteilungsgehäuse angeordnet ist, wobei das Primärverteilungsgehäuse aus nichtleitendem Material hergestellt ist, und eine Sekundärverteilungseinheit 220, wobei die Sekundärverteilungseinheit eine Sekundärverteilung 221 und ein Sekundärverteilungsgehäuse 222 aufweist, wobei die Sekundärverteilung in dem Sekundärverteilungsgehäuse angeordnet ist, wobei das Sekundärverteilungsgehäuse aus nichtleitendem Material hergestellt ist, und ein Trenntransformatorgehäuse 300, wobei der Trenntransformator in dem Trenntransformatorgehäuse elektrisch isoliert von dem Trenntransformatorgehäuse angeordnet ist. Dies ermöglicht eine besonders hohe Abstrahlsicherheit bei Übertragung von vertraulichen oder geheimen Informationen.

## Beschreibung

Die vorliegende Erfindung betrifft das Gebiet von Transformatorvorrichtungen und insbesondere eine Trenntransformatorvorrichtung für ortsveränderliche transportable Baueinheiten besonderer Art.

Es kann vorkommen, dass in ortsveränderlichen Baueinheiten, wie zum Beispiel militärisch verwendeten Containern, vertrauliche oder geheime Informationen verarbeitet werden müssen. Dafür ist es notwendig, Sicherheitsvorkehrungen zu treffen, um ein "Abhören" bzw. Abgreifen dieser Informationen zu verhindern.

Stand der Technik ist eine Trenntransformatoreinheit, die auf einer Primärseite des Trenntransformators die elektrische Schutzklasse II erfüllt und mit einem Leitungsschutzschalter geschützt ist. Die elektrischen Betriebsmittel innerhalb der Trenntransformatorbaueinheit werden ohne Absicherung an die Sekundärseite des Trenntransformators geschlossen.

Nachteilig am Stand der Technik ist, dass die aktuellen DIN Normen (DIN VDE 0100-717, DIN VDE 0100-410) nicht mehr eingehalten werden können, da zum Beispiel die geforderten Abschaltzeiten nicht eingehalten werden können. Auch besteht auf Sekundärseite keine elektrische Schutzklasse II, da das Gehäuse des Trenntransformators mit der Baueinheit verbunden wird. Es werden zwar Filter wie Netzfilter bzw. Durchführungsfilter vorgesehen, allerdings kann bei Kombination kein konstanter Dämpfungswert zwischen E-Feld und H-Feld erreicht werden, so dass in diesem Fall nicht einmal die unterste Geheimhaltungsstufe VS-NFD für Behörden eingehalten werden kann. Auch derzeitige Kabeleinführungen und Belüftungen, wie Kiemenprägungen, können die Anforderungen an Geheimstufen hinsichtlich Abstrahlsicherheit nicht erfüllen.

Es ist daher gewünscht, eine Lösung vorzustellen, die zumindest einige der obigen Nachteile adressiert und insbesondere beseitigt.

Erfindungsgemäß wird nach einem ersten Aspekt eine Trenntransformatorvorrichtung vorgeschlagen, wie sie in Anspruch 1 definiert ist, nämlich eine Trenntransformatorvorrichtung für ortsveränderliche transportable Baueinheiten, insbesondere mobile Container, wobei die Trenntransformatorvorrichtung aufweist: einen Trenntransformator, wobei der Trenntransformator umfasst: eine Primärverteilungseinheit, wobei die Primärverteilungseinheit eine Primärverteilung und ein Primärverteilungsgehäuse aufweist, wobei die Primärverteilung in dem Primärverteilungsgehäuse angeordnet ist, wobei das Primärverteilungsgehäuse aus nichtleitendem Material hergestellt ist, und eine Sekundärverteilungseinheit, wobei die Sekundärverteilungseinheit eine Sekundärverteilung und ein Sekundärverteilungsgehäuse aufweist, wobei die Sekundärverteilung in dem Sekundärverteilungsgehäuse angeordnet ist, wobei das Sekundärverteilungsgehäuse aus nichtleitendem Material hergestellt ist, und ein Trenntransformatorgehäuse, wobei der Trenntransformator in dem Trenntransformatorgehäuse elektrisch isoliert von dem Trenntransformatorgehäuse angeordnet ist.

Durch die erfindungsgemäße Trenntransformatorvorrichtung kann bei Einsatz in einem mobilen Container die Abhörsicherheit von Informationen, die in dem mobilen Container empfangen, verarbeitet oder versendet werden, erhöht werden.

Bevorzugt ist das Trenntransformatorgehäuse zumindest teilweise aus Metall. Dann sind besonders bevorzugt alle metallischen Elemente des Trenntransformatorgehäuses chromatiert und anschließend pulverbeschichtet, letzteres zum Beispiel zur Farbgebung. Die Chromatierung gewährleistet eine konstante elektrische Verbindung/Leitfähigkeit.

Bevorzugt ist der Trenntransformator in dem Trenntransformatorgehäuse auf Isolationsfüßen, die als Isolationspuffer verstanden werden können, positioniert. D.h. zur Realisierung der elektrischen Isolierung umfasst die Trenntransformatorvorrichtung Isolationspuffer, vorzugsweise vier Isolationspuffer, auf denen der eigentliche Trenntransformator, insbesondere ein Dreiphasentransformator, angeordnet ist.

Die Trenntransformatorvorrichtung ist für ortsveränderliche transportable Baueinheiten vorgesehen und eingerichtet. Insbesondere ist die Trenntransformatorvorrichtung für mobile Container vorgesehen und eingerichtet. Die Trenntransformatorvorrichtung umfasst einen Trenntransformator und ein Trenntransformatorgehäuse. Umfasst das Transformatorgehäuse einzelne Bestandteile des Trenntransformatorgehäuses, wie Abdeckplatten, weisen diese Bestandteile bevorzugt Dichtungen und/oder Abschirmungen auf. Insbesondere ist der Trenntransformator bzw. das Trenntransformatorgehäuse zur Erfüllung der Anforderungen für den Abstrahlschutz nach A-962-2-NFD vorgesehen und eingerichtet.

Der Trenntransformator umfasst eine Primärverteilungseinheit und eine Sekundärverteilungseinheit. Die Primärverteilungseinheit umfasst eine Primärverteilung und ein Primärverteilungsgehäuse, wobei die Primärverteilung in dem Primärverteilungsgehäuse angeordnet ist. Das Primärverteilungsgehäuse ist aus nichtleitendem Material hergestellt, d.h. aus elektrisch isolierendem Material. Die Sekundärverteilungseinheit umfasst eine Sekundärverteilung ein Sekundärverteilungsgehäuse, wobei die Sekundärverteilung in dem Sekundärverteilungsgehäuse angeordnet ist. Auch das Sekundärverteilungsgehäuse ist aus nichtleitendem, d.h. elektrisch isolierendem Material, hergestellt.

Der Trenntransformator ist in dem Trenntransformatorgehäuse elektrisch isoliert von dem Trenntransformator angeordnet.

In einer vorteilhaften Ausgestaltung eines Aspekts der Erfindung weist die elektrische Isolierung des Trenntransformators von dem Trenntransformatorgehäuse eine Durchschlagsfestigkeit von 5 kV oder mehr auf. Bevorzugt ist die Durchschlagsfestigkeit 5,2 kV. Dies erlaubt die Einhaltung der Schutzklasse II, insbesondere nach EN 61439-1.

In einer weiteren vorteilhaften Ausgestaltung eines Aspekts der Erfindung umfasst die Sekundärverteilungseinheit eine erste automatische Abschaltvorrichtung, die in dem Sekundärverteilungsgehäuse angeordnet ist, wobei die erste automatische Abschaltvorrichtung ausgestaltet ist, bei Kurzschluss, Erdschluss oder Überlast einen Ausgang der Trenntransformatorvorrichtung abzuschalten. Ein Kurzschluss liegt vor bei einer, typischerweise im Fehlerfall auftretenden, elektrischen Verbindung mit einem sehr niedrigen Widerstand zwischen Außenleitern oder einem Außenleiter und einem Neutralleiter. Ein Erdschluss liegt vor bei einer elektrischen Verbindung mit einem sehr niedrigen Widerstand zwischen Außenleiter und Schutzleiter. Eine Überlast liegt vor bei einer positiven Differenz zwischen bereitgestellter Leistung und benötigter Leistung.

Durch Vorsehen der automatischen Abschaltvorrichtung kann die Transformatorvorrichtung auch Bauteile umfassen, bei denen die Schutzklasse II nicht eingehalten werden kann, wobei weiterhin die Abstrahlsicherheit hochgehalten werden kann, und insbesondere nach der automatischen Abschaltvorrichtung (nach den Anforderungen nach DIN VDE 0100-717) ein "Bruch" der Schutzklasse II in die Schutzklasse I erfolgen. Dies passiert beispielsweise, wenn nach der automatischen Abschaltvorrichtung ein Schutzklasse I Betriebsmittel angeschlossen wird. Insbesondere kann zum einen vor der automatischen Abschaltvorrichtung die Schutzklasse II und hinter der automatischen Abschaltvorrichtung zum Beispiel ein Netzfilter vorgesehen sein.

In einer weiteren vorteilhaften Ausgestaltung eines Aspekts der Erfindung umfasst die Trenntransformatorvorrichtung weiter eine Kühlvorrichtung, wobei die Kühlvorrichtung ausgestaltet ist, die Trenntransformatorvorrichtung über Konvektionskühlung zu kühlen und/oder wobei die Kühlvorrichtung einen Lüfter umfasst. Bevorzugt weist der Lüfter eine zweite automatische Abschaltvorrichtung zum Abschalten des Lüfters auf. Die zweite automatische Abschaltvorrichtung kann ausgestaltet sein, bei Kurzschluss, Erdschluss oder Überlast den Lüfter der Trenntransformatorvorrichtung abzuschalten.

In einer weiteren vorteilhaften Ausgestaltung eines Aspekts der Erfindung umfasst das Trenntransformatorgehäuse Lüftungsschlitze in Form von Wabenkabinen. Diese sind besonders gut zur Schirmdämpfung geeignet. Lüftungsschlitze in Form von Wabenkabinen können zusätzlich oder alternativ zu länglichen Lüftungsschlitzen vorgesehen sein.

In einer weiteren vorteilhaften Ausgestaltung eines Aspekts der Erfindung sind die Primärverteilungseinheit und die Sekundärverteilungseinheit modular ausgeführt. Dies bedeutet, dass die Primärverteilungseinheit und/oder die Sekundärverteilungseinheit modular zueinander, zu dem Trenntransformator und/oder dem Trenntransformatorgehäuse ausgeführt sind. "Modular" bedeutet hier, dass die Primärverteilungseinheit und/oder die Sekundärverteilungseinheit jeweils ausgestaltet sind, lösbar miteinander, mit dem Trenntransformator und/oder dem Trenntransformatorgehäuse verbindbar zu sein. Insbesondere ist bevorzugt das Primärverteilungsgehäuse und das Sekundärverteilungsgehäuse jeweils modular ausgeführt, d.h. lösbar miteinander, mit dem Trenntransformator und/oder dem Trenntransformatorgehäuse verbindbar.

"Modular" schließt auch ein, dass die Primärverteilungseinheit und die Sekundärverteilungseinheit ausgestaltet sind, auf verschiedene Weise miteinander, mit dem Trenntransformator und/oder dem Trenntransformatorgehäuse lösbar verbindbar zu sein. Beispielsweise sind die Primärverteilungseinheit und die Sekundärverteilungseinheit ausgestaltet, derart miteinander und/oder mit dem Trenntransformatorgehäuse verbindbar zu sein, dass entweder die Primärverteilungseinheit über der Sekundärverteilungseinheit oder die Sekundärverteilungseinheit über der Primärverteilungseinheit angeordnet ist.

Im Fall, dass weitere Komponenten, wie zum Beispiel ein Netzfilter, vorgesehen sind, sind die Primärverteilungseinheit und/oder die Sekundärverteilungseinheit bevorzugt auch zu dem Netzfilter modular ausgeführt. Dies kann beispielsweise dadurch realisiert werden, dass ein Anschluss der Primärverteilungseinheit und der Sekundärverteilungseinheit zum Anschließen eines Anschlusskabels an den Netzfilter identisch ausgestaltet ist.

Dadurch ist die Trenntransformatorvorrichtung besonders flexibel gestaltbar.

In einer weiteren vorteilhaften Ausgestaltung eines Aspekts der Erfindung umfasst die Sekundärverteilung ein TN-C-S System, wobei das TN-C-S System einen PEN-Anschluss umfasst, mit dem ein PEN-Leitern verbindbar ist. Der PEN-Anschluss kann zum Beispiel durch crimpen mit dem PEN-Leiter verbunden werden. Der PEN-Leiter wird in einen PE-Leiter und einen N-Leiter aufgetrennt. Besonders bevorzugt ist der PE-Anschluss direkt mit dem Trenntransformatorgehäuse elektrisch verbunden. D.h. die Trenntransformatorvorrichtung ist ausgestaltet, aus einem unbekannten Netz ein definiertes Netz zu erzeugen. Zum Beispiel kann die Trenntransformatorvorrichtung mit einem TN, TT oder IT System eingespeist werden und dann am Ausgang ein TN-C-S System errichten.

In einer weiteren vorteilhaften Ausgestaltung eines Aspekts der Erfindung ist die Trenntransformatorvorrichtung Teil eines Systems mit wenigstens einem Netzeingangskabel, wobei das Netzeingangskabel eine Netzeingangskabelabschirmung zur elektrischen Abschirmung des Netzeingangskabels aufweist. Die Netzeingangskabelabschirmung umfasst bevorzugt einen innen verlaufenden Kabelschirm. Dadurch kann durch einen Außenmantel des Netzeingangskabels Schutzklasse II erreicht werden. Das Netzeingangskabel ist in einem Netzeingangsrohr angeordnet, wobei das Netzeingangsrohr eine Netzeingangsrohrabschirmung zur Abschirmung von elektrischen Feldern aus dem Netzeingangskabel aufweist. Die Netzeingangsrohrabschirmung umfasst bevorzugt ein Schirmaußengeflecht. Dadurch wird der Netzeingang doppelt geschirmt ausgeführt, um den Anforderungen der VS NFD zu genügen. Dadurch kann eine Schirmung gewährleistet werden, auch wenn das Netzeingangskabel nicht fachgerecht verlegt wird (Stichwort: Redundanz). Das Netzeingangsrohr sorgt für einen zusätzlichen mechanischen Schutz des Netzeingangskabels. Die Netzeingangskabelabschirmung und die Netzeingangsrohrabschirmung sind mit einer Außenwand einer transportablen Baueinheit beidseitig elektrisch verbindbar. "Beidseitig" bedeutet hier, dass beide Schirmungen, d.h. die Netzeingangskabelabschirmung und die Netzeingangsrohrabschirmung, mit der Außenwand elektrisch verbindbar sind. Dadurch kann verhindert werden, dass elektrische Felder aus dem Kabel dringen.

In einer weiteren vorteilhaften Ausgestaltung eines Aspekts der Erfindung umfasst das Netzeingangsrohr ein elektrisch leitendes Wellrohr, bevorzugt Stahlwellrohr, wobei das Netzeingangsrohr ein elektrisch nicht leitendes Wellrohr umfasst und/oder wobei das Netzeingangskabel erd- und kurzschlussfest verlegt ist, beispielsweise fixiert ist. Eine "erd -und kurzschlussfeste Verlegung" bedeutet, dass die betreffende Leitung so verlegt wird (auch innerhalb eines Schaltschranks), dass keine mechanische Belastung auftreten kann. Dies erhöht weiter die Abhörsicherheit des Systems.

In einer weiteren vorteilhaften Ausgestaltung eines Aspekts der Erfindung wird das Netzeingangskabel in das Trenntransformatorgehäuse geführt, wobei das Netzeingangskabel direkt mit der Primärverteilung elektrisch verbindbar ist. Dies erhöht insbesondere eine Robustheit der Trenntransformatorvorrichtung.

In einer weiteren vorteilhaften Ausgestaltung eines Aspekts der Erfindung weist das System weiter einen Netzfilter auf, wobei die Trenntransformatorvorrichtung mit dem Netzfilter über ein Anschlusskabel verbunden ist. Bevorzugt weist der Netzfilter einen Kombifilter auf. Zusätzlich oder alternativ stellt der Netzfilter eine Dämpfung von mindestens 60 dB in einem Bereich von 100 kHz und 1 GHz und/oder eine Dämpfung von mindestens 10 dB in einem Bereich von 10 MHz bis 10 GHz bereit. Ersteres entspricht den Mindestanforderungen der VS NFD. Alternativ können auch andere Netzfilter verwendet werden, die den Mindestanforderungen der VS NFD genügen, beispielsweise ein Netzfilter mit einer Dämpfung von 100 dB in einem Bereich von 100 kHz bis 10 GHz. In derartiger Netzfilter kann die Abhörsicherheit der Trenntransformatorvorrichtung weiter erhöhen.

In einer weiteren vorteilhaften Ausgestaltung eines Aspekts der Erfindung ist das Anschlusskabel in einem Anschlussrohr angeordnet ist, wobei das Anschlussrohr bevorzugt ein elektrisch nicht leitendes Wellrohr umfasst. Dadurch kann eine doppelte Isolierung erreicht werden.

In einer weiteren vorteilhaften Ausgestaltung eines Aspekts der Erfindung sind ein Anschluss der Trenntransformatorvorrichtung, bevorzugt der Primärverteilung und der Sekundärverteilung für das Netzeingangskabel, und ein Anschluss des Netzfilters für das Anschlusskabel identisch ausgestaltet, wobei zumindest eine Anschlussseite des Anschlusskabels und zumindest einer Anschlussseite des Netzeingangskabels identisch ausgestaltet sind. Dies erhöht eine flexible Gestaltung der Trenntransformatorvorrichtung.

Die Erfindung bezieht sich auch auf eine ortsveränderliche transportable Baueinheit, insbesondere einen mobilen Container, mit einer Trenntransformatorvorrichtung nach einer der obigen Ausgestaltungen. Dabei weist die transportable Baueinheit bevorzugt eine Außenwand auf, an die eine Netzeingangskabelabschirmung und eine Netzeingangsrohrabschirmung beidseitig, d.h. innerhalb und außerhalb der transportablen Baueinheit, elektrisch verbindbar sind. Dies verstärkt weiter die Abschirmung gegen Abhörmechanismen.

In einer vorteilhaften Ausgestaltung weist die Baueinheit einen elektromagnetisch abgeschirmten Bereich auf, wobei die Trenntransformatorvorrichtung in dem elektromagnetisch abgeschirmten Bereich angeordnet ist. Dadurch wir der Abstrahlschutz nach den Anforderungen der A-962-2-NFD gewährleistet.

Die Trenntransformatorgehäuse, und im Fall eines Netzfilters auch der Netzfilter, ist/sind bevorzugt mit dem abgeschirmten Bereich abgestimmt, beispielsweise auf eine Kabinenschirmung von 40 dB, 60 dB oder 100dB (je nach Schutzbedürftigkeit).

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine perspektivische Darstellung zur Illustration eines ersten Ausführungsbeispiels der erfindungsgemäßen Transformatorvorrichtung,
- Fig. 2: eine schematische Darstellung zur Illustration eines zweiten Ausführungsbeispiels der erfindungsgemäßen Transformatorvorrichtung,
- Fig. 3: eine schematische Darstellung zur Illustration des ersten Ausführungsbeispiels der erfindungsgemäßen Transformatorvorrichtung von oben,
- Fig. 4: eine schematische Darstellung zur Illustration des ersten Ausführungsbeispiels der erfindungsgemäßen Transformatorvorrichtung von vorne,
- Fig. 5: eine schematische Darstellung zur Illustration des ersten Ausführungsbeispiels der erfindungsgemäßen Transformatorvorrichtung von einer Seite,
- Fig. 6A: eine schematische Darstellung zur Illustration des zweiten Ausführungsbeispiels der erfindungsgemäßen Transformatorvorrichtung von einer anderen Seite zur Illustration der Schnittebene A-A,
- Fig. 6B: eine Schnittansicht zur Illustration des zweiten Ausführungsbeispiels der erfindungsgemäßen Transformatorvorrichtung entlang der Schnittebene A-A,
- Fig. 7A: eine schematische Darstellung zur Illustration des zweiten Ausführungsbeispiels der erfindungsgemäßen Transformatorvorrichtung von der anderen Seite zur Illustration der Schnittebene B-B,
- Fig. 7B: eine Schnittansicht zur Illustration des zweiten Ausführungsbeispiels der erfindungsgemäßen Transformatorvorrichtung entlang der Schnittebene B-B,
- Fig. 8: eine perspektivische Explosionsdarstellung zur Illustration des ersten Ausführungsbeispiels der erfindungsgemäßen Transformatorvorrichtung,
- Fig. 9: eine weitere perspektivische Explosionsdarstellung zur Illustration des ersten Ausführungsbeispiels der erfindungsgemäßen Transformatorvorrichtung,
- Fig. 10: eine schematische Darstellung zur Illustration eines ersten Ausführungsbeispiels des erfindungsgemäßen Netzeingangskabels und
- Fig. 11: eine schematische Darstellung zur Illustration eines ersten Ausführungsbeispiels einer ortsveränderlichen transportablen Baueinheit.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

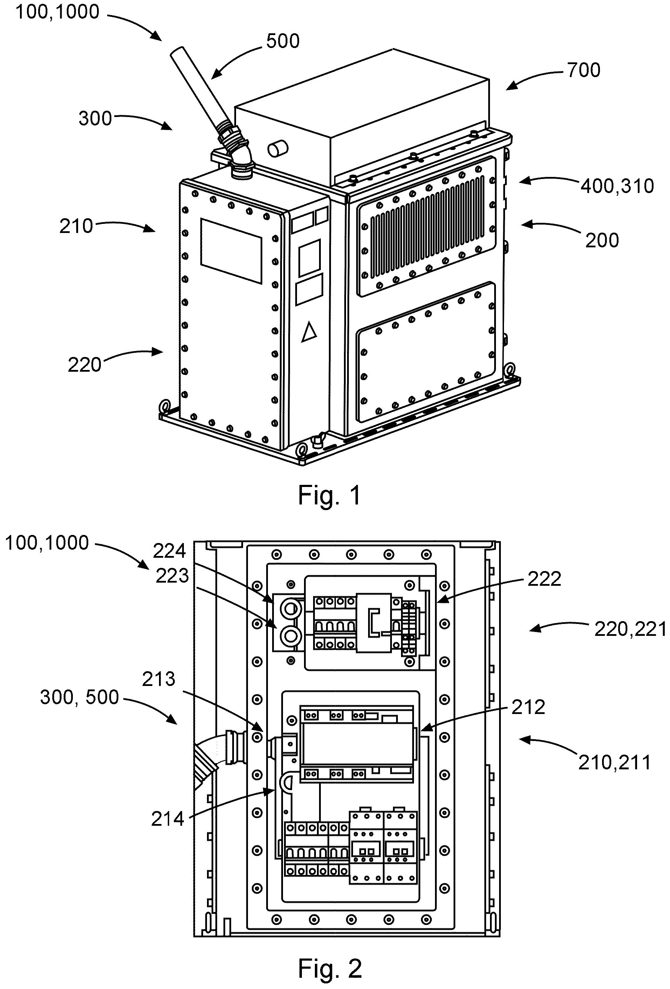

Fig. 1 zeigt eine perspektivische Darstellung zur Illustration eines ersten Ausführungsbeispiels der erfindungsgemäßen Transformatorvorrichtung 100. Die Transformatorvorrichtung 100 ist für ortsveränderliche transportable Baueinheiten vorgesehen und eingerichtet. Insbesondere handelt es sich bei ortsveränderlichen transportablen Baueinheiten um mobile Container, wie sie zum Beispiel für das Militär eingesetzt werden.

Die Trenntransformatorvorrichtung 100 weist einen Trenntransformator 200 auf. Weiter weist der Trenntransformator 200 eine Primärverteilungseinheit 210 und eine Sekundärverteilungseinheit 220 auf.

Zudem weist die Trenntransformatorvorrichtung 100 ein Trenntransformatorgehäuse 300 auf, in dem der Trenntransformator 200 angeordnet ist. Insbesondere ist der Trenntransformator 200 elektrisch isoliert von dem Trenntransformatorgehäuse 300 in dem Trenntransformatorgehäuse 300 angeordnet. Die elektrische Isolierung des Trenntransformators 200 von dem Trenntransformatorgehäuse 300 weist eine Durchschlagsfestigkeit von 5 V oder mehr auf.

Die Trenntransformatorvorrichtung 100 umfasst in der gezeigten Ausführungsform eine Kühlvorrichtung 400, wobei die Kühlvorrichtung 400 ausgestaltet ist, die Trenntransformatorvorrichtung 100 zu kühlen. Beispielsweise kann die Trenntransformatorvorrichtung 100 über eine Konvektionskühlung gekühlt werden. Zusätzlich oder alternativ kann ein Lüfter vorgesehen sein (s. unten).

Das Trenntransformatorgehäuse 300 umfasst längliche Lüftungsschlitze, die zusätzlich zu Lüftungsschlitzen in Form von Wabenkabinen (s. unten) vorgesehen sein können.

Neben der Trenntransformatorvorrichtung 100 ist in Fig. 1 ein Netzeingangskabel 500 gezeigt. Anders ausgedrückt wird in Fig. 1 ein System 1000 gezeigt, wobei das System 1000 eine Trenntransformatorvorrichtung 100 und ein Netzeingangskabel 500 umfasst.

In Fig. 1 ist das Netzeingangskabel 500 an einer oberen Seite der Trenntransformatorvorrichtung 100 vorgesehen, wobei alternativ, wie in Fig. 2 gezeigt, das Netzeingangskabel 500 seitlich von der Trenntransformatorvorrichtung 100 vorgesehen sein kann.

Das Netzeingangskabel 500 wird in der gezeigten Ausführungsform in das Trenntransformatorgehäuse 300 geführt. Weiter kann das Netzeingangskabel 500 jeweils direkt mit wenigstens der Primärverteilung 211 elektrisch verbunden werden. Vorliegend ist die Primärverteilungseinheit 210 oberhalb der Sekundärverteilungseinheit 220 und das Netzeingangskabel 500 oberhalb der Primärverteilungseinheit 210 angeordnet, wobei das Netzeingangskabel 500 direkt mit der Primärverteilungseinheit 210 bzw. der Primärverteilung 211 elektrisch verbunden ist. Alternativ kann bei der gezeigten Anordnung der Primärverteilungseinheit 210 und der Sekundärverteilungseinheit 220 das Netzeingangskabel 500 seitlich angeordnet sein.

Das System 1000 weist weiter einen Netzfilter 700 auf, wobei die Trenntransformatorvorrichtung 100 mit dem Netzfilter 700 über ein Anschlusskabel (nicht gezeigt) verbindbar ist. Bevorzugt ist das Anschlusskabel in einem Anschlussrohr angeordnet, wobei weiter bevorzugt das Anschlussrohr ein elektrisch nicht leitendes Wellrohr umfasst. Der Netzfilter 700 ist oberhalb der Primärverteilungseinheit 210, insbesondere oberhalb des Trenntransformatorgehäuses 300, angeordnet.

Der Netzfilter 700 weist vorzugsweise einen Kombifilter auf. Zusätzlich oder alternativ stellt der Netzfilter 700 eine Dämpfung von mindestens 60 dB in einem Bereich von 100 kHz bis 1 GHz bereit.

Fig. 2 zeigt eine schematische Darstellung zur Illustration eines zweiten Ausführungsbeispiels der erfindungsgemäßen Transformatorvorrichtung. Insbesondere entspricht die gezeigte Vorrichtung im Wesentlichen der Trenntransformatorvorrichtung 100 bzw. dem System 1000 aus Fig. 1, wobei sich eine Anordnung von Primärverteilungseinheit 210, Sekundärverteilungseinheit 220 und Netzeingangskabel 500 von der in Fig. 1 unterscheidet.

In Fig. 2 ist die Primärverteilungseinheit 210 unterhalb der Sekundärverteilungseinheit 220 angeordnet. Weiter ist das Netzeingangskabel 500 seitlich von der Trenntransformatorvorrichtung 100 angeordnet.

Fig. 2 zeigt die Trenntransformatorvorrichtung 100 bzw. die Primärverteilungseinheit 210 und die Sekundärverteilungseinheit 220 von einer Seite, wobei eine Abdeckplatte des Trenntransformatorgehäuses 300 nicht gezeigt ist, so dass die Primärverteilungseinheit 210 und die Sekundärverteilungseinheit 220 erkennbar ist.

Die Primärverteilungseinheit 210 weist eine Primärverteilung 211 und ein Primärverteilungsgehäuse 212 auf, wobei die Primärverteilung 211 in dem Primärverteilungsgehäuse 212 angeordnet ist. Das Primärverteilungsgehäuse 212 ist aus nicht leitendem Material hergestellt.

Die Sekundärverteilungseinheit 220 weist eine Sekundärverteilung 221 und ein Sekundärverteilungsgehäuse 222 auf, wobei die Sekundärverteilung 221 in dem Sekundärverteilungsgehäuse 222 angeordnet ist. Das Sekundärverteilungsgehäuse 222 ist aus nicht leitendem Material hergestellt.

Die Primärverteilungseinheit 210 und die Sekundärverteilungseinheit 220 sind in einem räumlich abgetrennten Gehäuseteil des Trenntransformatorgehäuses 300 angeordnet.

Das Primärverteilungsgehäuse 212 umfasst einen Kabeleingang 213 für das Netzeingangskabel 500. Zudem umfasst das Primärverteilungsgehäuse 212 eine (erste) Kabeldurchführung 214 zum eigentlichen Trenntransformator (in Fig. 2 nach hinten). Dabei ist bevorzugt, dass Anschlussleitungen zum eigentlichen Trenntransformator kurzschlussfest, mit einem Wellrohr aus nichtleitendem Material umhüllt werde und/oder direkt an die Primärverteilungseinheit angeschlossen werden. D.h. die Anschlussleitungen am Trenntransformator sind Kurzschlussfestleitungen, welche in einem Wellrohrsystem aus nichtleitendem Material innerhalb des Gehäuses geführt werden. Dies ist erforderlich, um die Schutzklasse II aufrecht zu erhalten. Das "Wellrohrsystem" bietet zusätzlich mechanischen Schutz für das Kabel und das Kabel selbst ist für mittlere mechanische Beanspruchung ausgelegt.

Das Sekundärverteilungsgehäuse 222 umfasst eine (zweite) Kabeldurchführung 223 zum eigentlichen Trenntransformator (in Fig. 2 nach hinten) und eine (dritte) Kabeldurchführung 224 zum Netzfilter 700.

Zudem umfasst die Sekundärverteilungseinheit 220 eine erste automatische Abschaltvorrichtung. Die erste automatische Abschaltvorrichtung ist in dem Sekundärverteilungsgehäuse 222 angeordnet, wobei die erste automatische Abschaltvorrichtung ausgestaltet ist, bei Kurzschluss oder Überlast einen Ausgang der Trenntransformatorvorrichtung 100 abzuschalten.

Bevorzugt umfasst die Sekundärverteilung 221 ein TN-C-S System, wobei das TN-C-S System einen PEN-Anschluss umfasst, mit dem ein PEN-Leiter zum Beispiel durch crimpen verbunden wird. Der PEN-Leiter wird in einen PE-Leiter und einen N-Leiter aufgetrennt, wobei dann besonders bevorzugt der PE-Anschluss direkt mit dem Trenntransformatorgehäuse 300 elektrisch verbunden wird.

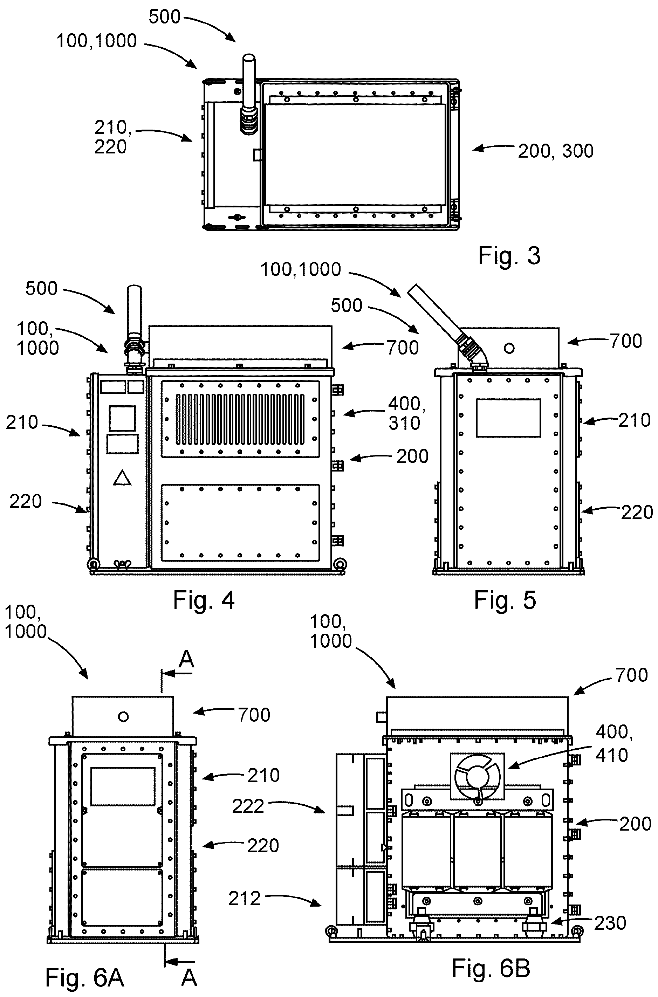

Fig. 3 zeigt eine schematische Darstellung zur Illustration des ersten Ausführungsbeispiels der erfindungsgemäßen Transformatorvorrichtung von oben, Fig. 4 zeigt eine schematische Darstellung zur Illustration des ersten Ausführungsbeispiels der erfindungsgemäßen Transformatorvorrichtung von vorne und Fig. 5 eine schematische Darstellung zur Illustration des ersten Ausführungsbeispiels von einer Seite. Insbesondere ist hier wie in Fig. 1 das Netzeingangskabel 500 oberhalb der Trenntransformatorvorrichtung 100 bzw. die Primärverteilungseinheit 210 oberhalb der Sekundärverteilungseinheit 220 angeordnet. Weiter sind die zuvor beschriebenen Elemente bzw. Merkmale der Trenntransformatorvorrichtung 100 bzw. des Systems 1000 gezeigt.

Es ist anzumerken, dass die Angabe, dass in Fig. 4 die Vorderseite der Trenntransformatorvorrichtung gezeigt ist, nicht beschränkend verstanden werden soll. Vielmehr kann die Trenntransformatorvorrichtung auch derart verstanden werden, dass eine Vorderseite der Seite entspricht, die in Fig. 5 gezeigt ist. Vorliegend beziehen sich jedoch alle Angaben dahingehend auf die Trenntransformatorvorrichtung, dass die Seite, die in Fig. 4 gezeigt ist, der Vorderseite der Trenntransformatorvorrichtung entspricht.

Fig. 6A zeigt eine schematische Darstellung zur Illustration des zweiten Ausführungsbeispiels von einer Seite. In Fig. 6A ist eine Schnittebene A-A eingezeichnet, wobei Fig. 6B eine Schnittansicht zur Illustration des zweiten Ausführungsbeispiels entlang der Schnittebene A-A zeigt.

In Fig. 6B sind einzelne Bauteile des eigentlichen Trenntransformators, insbesondere eines Dreiphasen-Transformators, zu erkennen. Weiter ist gezeigt, dass der Trenntransformator 200 in dem Trenntransformatorgehäuse 300 elektrisch isoliert von dem Trenntransformatorgehäuse 300 angeordnet ist. Dies ist vorliegend durch (insgesamt vier) Isolationspuffer 230 realisiert, die jeweils vorzugsweise eine Durchschlagsfestigkeit von über 5 kV aufweisen und auf denen der eigentliche Trenntransformator steht. D.h. zur Realisierung der elektrischen Isolierung umfasst die Trenntransformatorvorrichtung 100 Isolationspuffer230, vorzugsweise vier Isolationspuffer, auf denen der eigentliche Trenntransformator angeordnet ist.

Weiter ist ein Lüfter 410 zu erkennen, der hinter den Lüftungsschlitzen 310 angeordnet ist.

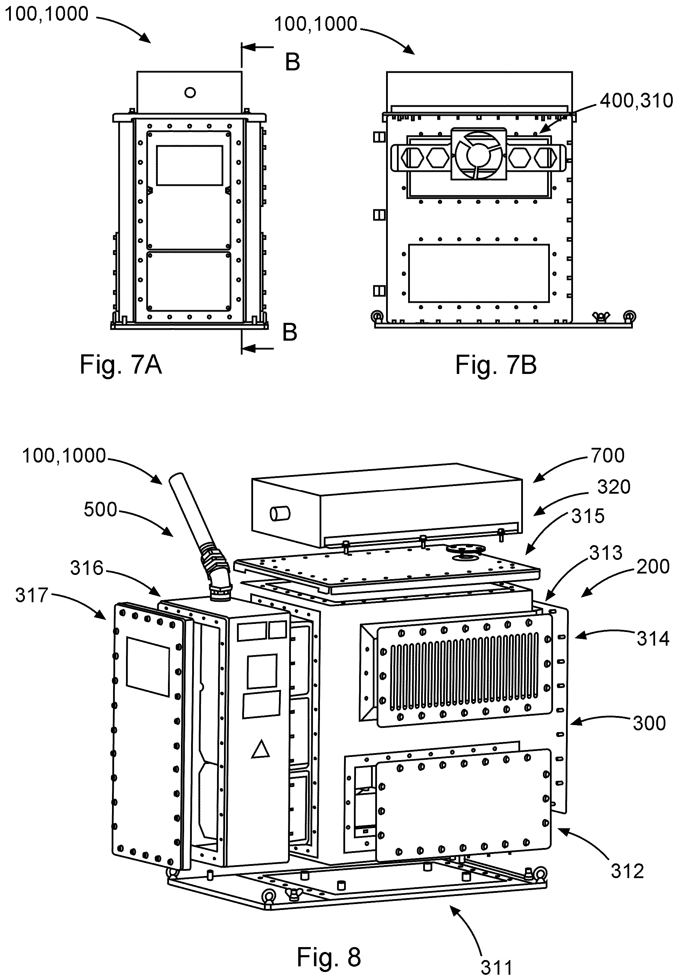

Fig. 7A zeigt eine schematische Darstellung zur Illustration des zweiten Ausführungsbeispiels wie in Fig. 6A, wobei in Fig. 7A eine Schnittebene B-B gezeigt ist und in Fig. 7B eine Schnittansicht entlang der Schnittebene B-B.

Neben dem Lüfter 410 ist in Fig. 7B auch gezeigt, dass Lüftungsschlitze in Form von Wabenkabinen 310 vorgesehen sind.

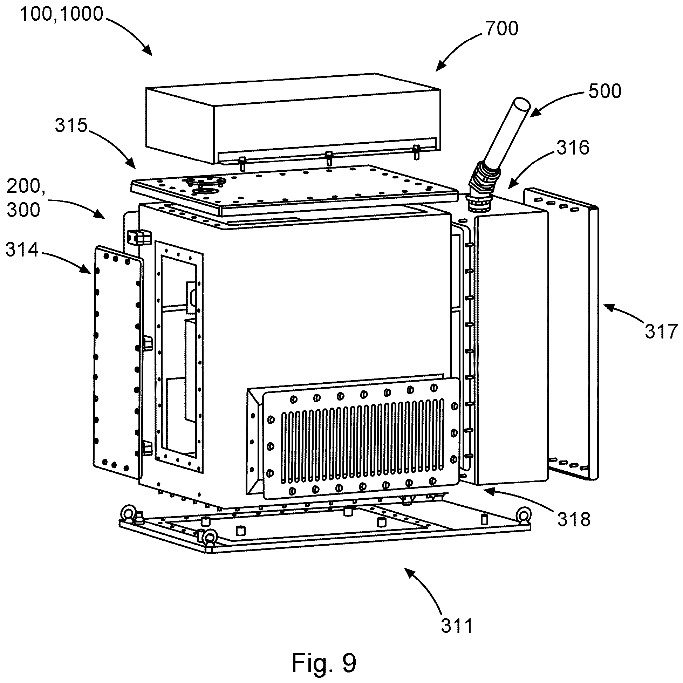

Fig. 8 zeigt eine perspektivische Explosionsdarstellung zur Illustration des ersten Ausführungsbeispiels von schräg vorne, und Fig. 9 von schräg hinten. Zusätzlich zu den bereits beschriebenen Elementen sind in den Figuren 8 und 9 einzelne Bestandteile des Trenntransformatorgehäuses 300 gezeigt. Sind einzelne Bestandteile des Trenntransformatorgehäuses 300, wie Abdeckplatten, vorgesehen, weisen diese Bestandteile bevorzugt Dichtungen und/oder Abschirmungen auf.

Insbesondere umfasst das Trenntransformatorgehäuse 300 eine Bodenplatte 311, auf der der Trenntransformator elektrisch isoliert und weitere Gehäuseteile befestigt werden können.

Weiter umfasst das Trenntransformatorgehäuse 300 zum Beispiel im unteren Bereich der Vorderseite eine Abdeckplatte 312 und im oberen Bereich der Vorderseite eine Abdeckplatte mit länglichen Lüftungsschlitzen 313.

Zudem ist eine weitere Abdeckung 314 seitlich an dem Trenntransformatorgehäuse 300 vorgesehen.

Das Trenntransformatorgehäuse 300 weist zudem eine Oberplatte 315 auf, auf der in der gezeigten Ausführungsform der Netzfilter 700 angeordnet, insbesondere fixiert, sein kann. Insbesondere ist in der Oberplatte 315 eine Durchführung für das Anschlusskabel vorgesehen, durch die das Anschlusskabel von der Sekundärverteilungseinheit 210 zum Netzfilter 700 geführt werden kann.

Weiter weist die Trenntransformatorvorrichtung 100 ein Gehäuseteil 316 auf, in dem die Primärverteilungseinheit 210 und die Sekundärverteilungseinheit 220 angeordnet ist. Das Gehäuseteil 316 kann mit einer Abdeckplatte 317 abgedeckt werden.

Auch auf der Rückseite weist das Trenntransformatorgehäuse 300 eine Abdeckplatte mit Lüftungsschlitzen 318 auf, wobei in der gezeigten Ausführungsform dieses unten von dem Trenntransformatorgehäuse 300 angeordnet ist.

Es sei angemerkt, dass alle Elemente, die im Zusammenhang mit Fig. 8 und 9 beschrieben sind, einzeln vorgesehen sein können. Insbesondere kann die Position und Größe anders vorgesehen sein.

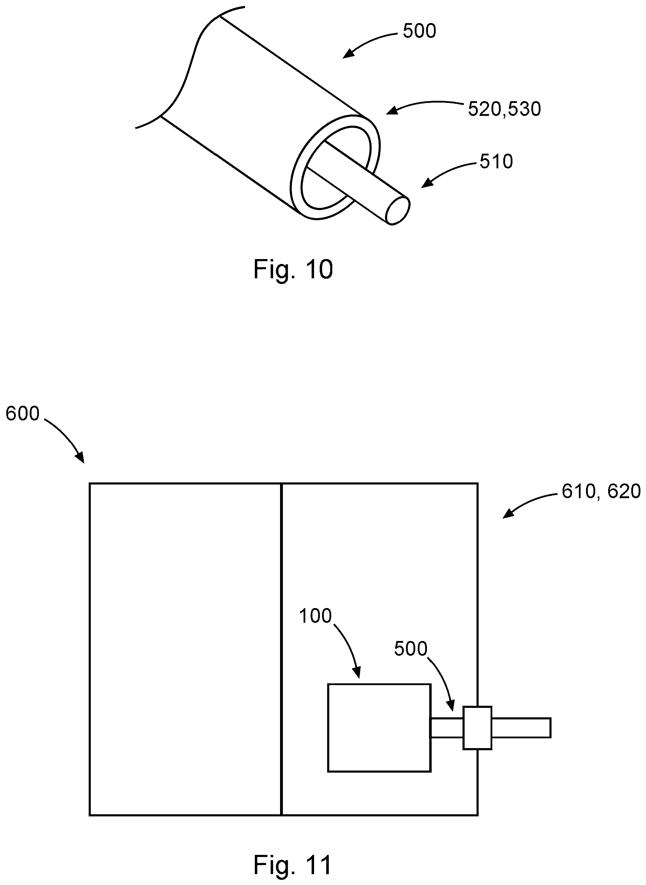

Fig. 10 zeigt eine schematische Darstellung zur Illustration eines ersten Ausführungsbeispiels des erfindungsgemäßen Netzeingangskabels. Das Netzeingangskabel 500 weist eine Netzeingangskabelabschirmung 510 zur elektrischen Abschirmung des Netzeingangskabels 500 auf. Dabei ist das Netzeingangskabel 500 in einem Netzeingangsrohr 520 angeordnet, wobei das Netzeingangsrohr 520 eine Netzeingangsrohrabschirmung 530 zur Abschirmung von elektrischen Feldern aus dem Netzeingangskabel 500 aufweist. Die Netzeingangskabelabschirmung 510 und die Netzeingangsrohrabschirmung 530 sind mit einer Außenwand 620 einer transportablen Baueinheit 600 beidseitig elektrisch verbindbar. Beispielsweise wird an beiden Enden ein Wellrohranschlusssystem angebracht. Die Netzeingangskabelabschirmung 510, beispielsweise der innen verlaufende Kabelschirm, wird an einem EMV-Adapterverbunden und die Netzeingangsrohrabschirmung 530, d.h. der außenliegende Schirm vom Netzeingangsrohr 520, zum Beispiel über einen Druck- und Erdungsring, mit dem Anschlusssystem verbunden, insbesondere verschraubt. Dadurch werden beide Schirme leitfähig mit der Außenwand 620 verbunden.

Das Netzeingangsrohr 520 kann ein elektrisch leitendes Wellrohr, beispielsweise Stahlwellrohr, umfassen, wobei das Netzeingangsrohr 520 ein elektrisch nicht leitendes Wellrohr umfasst und/oder wobei das Netzeingangskabel 500 erd- und kurzschlussfest verlegt ist. Dafür wird das Netzeingangskabel 500 an den Anschlussstellen des Netzeingangskabels 500 (zusätzlich) fixiert. Eine erd- und kurzschlusssichere Verlegung bedeutet, dass die betreffende Leitung so verlegt wird (auch innerhalb eines Schaltschranks), dass keine mechanische Belastung auftreten kann.Eine ortsveränderliche transportable Baueinheit ist zudem in Fig. 12 gezeigt. Die ortsveränderliche transportable Baueinheit 600 umfasst bevorzugt einen elektromagnetisch abgeschirmten Bereich 610. Dabei ist bevorzugt die Trenntransformatorvorrichtung 100 in dem elektromagnetisch abgeschirmten Bereich 610 angeordnet. Das Netzeingangskabel 500 ist durch eine Außenwand 620 durchführbar. Insbesondere ist eine Schirmung des Kabels und des Wellrohrs mit der Außenwand 620 verbindbar.

Bevorzugt ist die Primärverteilungseinheit 210 modular ausgeführt zu der Sekundärverteilungseinheit 220. Zusätzlich oder alternativ ist die Primärverteilungseinheit 210 und/oder die Sekundärverteilungseinheit 220 modular zu einem Trenntransformatorgehäuse 300 700 ausgeführt.

Weiter ist bevorzugt, dass ein Anschluss der Trenntransformatorvorrichtung 100, insbesondere der Primärverteilung 211 und der Sekundärverteilung 221 für das Netzeingangskabel 500, und ein Anschluss des Netzfilters 700 für das Anschlusskabel identisch ausgestaltet sind. Insbesondere sind zumindest eine Anschlussseite des Anschlusskabels und zumindest eine Anschlussseite des Netzeingangskabels identisch ausgestaltet. Somit können identische Kabel für die Verbindung des Netzes mit der Primärverteilungseinheit und für die Verbindung der Sekundärverteilungseinheit mit dem Netzfilter verwendet werden.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

Es folgen weitere Überlegungen zu der Erfindung:
Das von der Erfindung zu lösende Problem tritt vor allem bei Containern auf, die ortsveränderlich sind und vertrauliche Informationen (VS) oder höher (z.B. Geheim/NATO) verarbeiten.

Stand der Technik ist, besondere Trenntransformatoren zu verwenden, die bereits einige Sicherheitsvorkehrungen betreffen. Allerdings entsprechen diese nicht mehr den Verordnungen, die der Übertragung von VS oder höher zu Grunde liegen.

Der Zweck der Erfindung ist es, die Netzeinspeisung in ortveränderlichen transportablen Baueinheiten so zu gestalten, dass geltenden Normen, Schutzklassen und Verordnungen (zum Beispiel DIN VDE 0100-717, Schutzklasse II) entsprochen wird und dass VS oder höher aus dem Inneren der Baueinheit nicht nach außen gelangen können und dadurch zum Beispiel abgehört werden können.

Um die obigen Probleme zu adressieren, sind zumindest einige der folgenden Merkmale durch die erfindungsgemäße Vorrichtung realisiert: Innerhalb der Trenntransformatoreinheit ist die Primärverteilung aus nichtleitendem Material, so dass auch hier die Schutzklasse II eingehalten wird. Der Trenntransformator wird innerhalb des Transformatorgehäuses isoliert aufgestellt. Die Puffer, d.h. die elektrische Isolierung des Trenntransformators innerhalb des Transformatorgehäuses, haben/hat vorzugsweise eine Durchschlagsfestigkeit von 5,2 kV (nach EN 61439-1 Schutzklasse II Nachweis Prüfspannung 5kV).

Innerhalb der Transformatoreinheit ist die Sekundärverteilung ebenfalls aus nichtleitendem Material installiert. Somit wird auch hier die Schutzklasse II eingehalten.

Der Netzeingang/die Netzeinspeisung erfolgt bevorzugt über ein geschirmtes Kabel, welches besonders bevorzugt innerhalb eines geschirmten Stahlwellrohrs verläuft. Dabei werden die Schirme vom Kabel und Wellrohr beidseitig elektrisch mit dem Container oder einer Kabine innerhalb des Containers verbunden. Dies führt dazu, dass im Optimalfall die elektrischen Felder nicht aus dem Kabel dringen. Als zusätzliche Maßnahme verhindert der Schirm des Wellrohrs das Ausdringen der elektrischen Felder. Durch die Verwendung eines Anschlusskabels kann die elektrische Schutzklasse II innerhalb der Trenntransformatoreinheit erhalten bleiben.

Die Anschlussleitungen des Trenntransformators sind vorzugsweise kurzschlussfest und werden weiter bevorzugt mit einem Wellrohr aus nichtleitendem Material umhüllt. Dadurch erhält die Anschlussleitung eine doppelte Isolierung. Diese werden in einer bevorzugten Ausführungsform direkt an die Primär- und Sekundärverteilung angeschlossen. Die Anschlussleitungen werden weiter bevorzugt direkt vom Transformator in die Verteilungen geführt, insbesondere ohne Klemmstellen auf dem Transformator. Dadurch kann sich keine Leitung innerhalb des Transformatorgehäuses lösen.

In der Sekundärverteilung kann ein TN-C-S System errichtet werden. Dabei wird der PEN in PE und N aufgetrennt. Dies kann über crimpen realisiert werden, damit der Schutzleiter sich an einer Klemmstelle nicht vom PEN lösen kann. Der erzeugte PE wird vorzugsweise direkt auf das Transformatorgehäuse gelegt.

Bevorzugt befindet sich in der Sekundärverteilung eine (erste) automatische Abschaltvorrichtung, die bei Kurzschluss und Überlast abschaltet. Dadurch kann dahinter die Schutzklasse II gebrochen werden. Dies kann aufgrund des optionalen Netzfilters sinnvoll sein.

Der Anschluss an den optionalen Netzfilter erfolgt bevorzugt in ähnlicher Weise wie bei dem Trenntransformator. Die Anschlussleitungen werden zum Beispiel mit einem Wellrohr aus nichtleitendem Material umhüllt. Dadurch wird ebenfalls eine doppelte Isolierung sichergestellt, so dass der Bruch der Schutzklasse II zum Beispiel erst am Anschluss der Netzfilter erfolgt.

Der optionale Netzfilter kann einen Kombifilter aufweisen mit mindestens 60 dB zwischen 100 kHZ und 1 GHz.

Der Trenntransformator kann konvektionsgekühlt oder optional mit einem Lüfter ausgestattet werden. Das Trenntransformatorgehäuse verfügt beispielsweise über Lüftungsschlitze in Form von Wabenkabinen. Diese sind bestens für die Schirmdämpfung geeignet.

Optional kann das System modular ausgeführt sein, d.h. die Primärverteilung, die Sekundärverteilung und/oder der Netzfilter lösbar miteinander verbindbar sein. Dafür können die Primärverteilung, die Sekundärverteilung und/oder der Netzfilter demontiert werden und dann die Verbindungsstellen über das Wellrohreinführungssystem miteinander verbunden werden.

Durch Verwendung von optimierten Beschichtungssystemen, Chromatierung und Pulverbeschichtung lassen sich Korrionsbeständigkeit und Dämpfungseigenschaften noch deutlich verbessern. Außerdem lassen sich durch die gezielte Auswahl von Abdichtelementen zwischen den Gehäuseteilen die Dämpfungseigenschaften weiter verbessern (Abschirmbänder, -gewebe, leitfähige Elastomerdichtungen, leitende Textildichtungen oder gestrickte Schnur).

Bei den Abdichtelementen handelt es sich beispielsweise um EMV-Filterelemente. Gemäß einer Ausführungsform weisen diese Mesh-Elemente auf.

Folgende Vorteile können durch die erfindungsgemäße Trenntransformatorvorrichtung erreicht werden:
Die Trenntransformatoreinheit ist flexibel gestaltbar, insbesondere durch die Modularität, das System ist vom BSI freigegeben, Abschaltzeiten (nach DIN VDE 0100-410) werden eingehalten, das System erfüllt den neusten Stand der Technik (VDE 0100-717), das System sichert die Schutzklasse II (insbesondere innerhalb der Schutzklasse I) und/oder es wird eine bessere Lösung zur Belüftung bereitgestellt.

Ein bevorzugtes Beispiel ist ein 3-phasiger Trenntransformator, der für den Einsatz nach HD 60364-7-717 Anforderungen für Betriebsstätten, Räume und Anlagen besonderer Art - ortsveränderliche oder transportable Baueinheiten geeignet ist. Das einspeisende Netz wird vom Bordnetz galvanisch getrennt, die Netzform der Einspeisung ist hierbei unabhängig, da auf der Sekundärseite des Trenntransformators ein neues Netz erzeugt wird. Der Schutzleiter des Einspeisenetzes wird so vom Bordnetz getrennt. In der Regel wird ein TN-S oder IT-Netz erzeugt. Die elektrischen Betriebsmittel sind durch ihre Ausführung und Einbauweise entsprechend der elektrischen Schutzklasse II ausgeführt. Das Gehäuse entspricht der Schutzklasse I und kann über einen Erdungsanschluss mit einer Potentialausgleichsschiene verbunden werden, um Potentialunterschiede auszugleichen und EMV-Störungen abzuleiten. Der Trenntransformator erfüllt die Anforderungen für den Abstrahlschutz nach A-962-2-NFD.

Unter dem Begriff "Modularität" wird verstanden, dass Komponenten der Trenntransformatoreinheit innerhalb bestimmter Grenzen auf verschiedene Arten relativ zueinander angeordnet werden können. So kann bspw. ein Filter an einem anderen Ort angebracht werden, gleiches gilt für Primär und Sekundärverteilung. Dies ermöglicht es bei geringen Platzverhältnissen die Anteile zu verteilen.

Die Erfindung betrifft eine Trenntransformatorvorrichtung für ortsveränderliche transportable Baueinheiten, insbesondere mobile Container, wobei die Trenntransformatorvorrichtung aufweist: einen Trenntransformator, wobei der Trenntransformator umfasst: eine Primärverteilungseinheit, wobei die Primärverteilungseinheit eine Primärverteilung und ein Primärverteilungsgehäuse aufweist, wobei die Primärverteilung in dem Primärverteilungsgehäuse angeordnet ist, wobei das Primärverteilungsgehäuse aus nichtleitendem Material hergestellt ist, und eine Sekundärverteilungseinheit, wobei die Sekundärverteilungseinheit eine Sekundärverteilung und ein Sekundärverteilungsgehäuse aufweist, wobei die Sekundärverteilung in dem Sekundärverteilungsgehäuse angeordnet ist, wobei das Sekundärverteilungsgehäuse aus nichtleitendem Material hergestellt ist, und ein Trenntransformatorgehäuse, wobei der Trenntransformator in dem Trenntransformatorgehäuse elektrisch isoliert von dem Trenntransformatorgehäuse angeordnet ist. Dies ermöglicht eine besonders hohe Abstrahlsicherheit bei Übertragung von vertraulichen oder geheimen Informationen.

## Patentansprüche

1. Trenntransformatorvorrichtung (100) für ortsveränderliche transportable Baueinheiten (600), insbesondere mobile Container, wobei die Trenntransformatorvorrichtung (100) aufweist:
einen Trenntransformator (200), wobei der Trenntransformator (200) umfasst:
eine Primärverteilungseinheit (210), wobei die Primärverteilungseinheit (210) eine Primärverteilung (211) und ein Primärverteilungsgehäuse (212) aufweist, wobei die Primärverteilung (211) in dem Primärverteilungsgehäuse (212) angeordnet ist, wobei das Primärverteilungsgehäuse (212) aus nichtleitendem Material hergestellt ist, und
eine Sekundärverteilungseinheit (220), wobei die Sekundärverteilungseinheit (220) eine Sekundärverteilung (221) und ein Sekundärverteilungsgehäuse (222) aufweist, wobei die Sekundärverteilung (221) in dem Sekundärverteilungsgehäuse (222) angeordnet ist, wobei das Sekundärverteilungsgehäuse (222) aus nichtleitendem Material hergestellt ist, und
ein Trenntransformatorgehäuse (300), wobei der Trenntransformator (200) in dem Trenntransformatorgehäuse (300) elektrisch isoliert von dem Trenntransformatorgehäuse (300) angeordnet ist.

2. Trenntransformatorvorrichtung (100) nach Anspruch 1, wobei die elektrische Isolierung des Trenntransformators (200) von dem Trenntransformatorgehäuse (300) eine Durchschlagsfestigkeit von 5 kV oder mehr aufweist.

3. Trenntransformatorvorrichtung (100) nach einem der Ansprüche 1 und 2, wobei die Sekundärverteilungseinheit (220) eine erste automatische Abschaltvorrichtung umfasst, die in dem Sekundärverteilungsgehäuse (222) angeordnet ist, wobei die erste automatische Abschaltvorrichtung ausgestaltet ist, bei Kurzschluss, Erdschluss oder Überlast einen Ausgang der Trenntransformatorvorrichtung (100) abzuschalten.

4. Trenntransformatorvorrichtung (100) nach einem der vorstehenden Ansprüche, wobei die Trenntransformatorvorrichtung (100) weiter eine Kühlvorrichtung (400) umfasst, wobei die Kühlvorrichtung (400) ausgestaltet ist, die Trenntransformatorvorrichtung (100) über Konvektionskühlung zu kühlen und/oder wobei die Kühlvorrichtung (400) einen Lüfter (410) umfasst und wobei der Lüfter (410) bevorzugt eine zweite automatische Abschaltvorrichtung zum Abschalten des Lüfters aufweist.

5. Trenntransformatorvorrichtung (100) nach einem der vorstehenden Ansprüche, wobei das Trenntransformatorgehäuse (300) Lüftungsschlitze (310) in Form von Wabenkabinen umfasst.

6. Trenntransformatorvorrichtung (100) nach einem der vorstehenden Ansprüche, wobei die Primärverteilungseinheit (210) und die Sekundärverteilungseinheit (220) modular ausgeführt sind.

7. Trenntransformatorvorrichtung (100) nach einem der vorstehenden Ansprüche, wobei die Sekundärverteilung (221) ein TN-C-S System umfasst, wobei das TN-C-S System einen PEN-Anschluss umfasst, mit dem ein PEN-Leiter, bevorzugt durch crimpen, verbindbar ist, wobei der PEN-Leiter in einen PE-Leiter und einen N-Leiter aufgetrennt wird, wobei besonders bevorzugt der PE-Anschluss direkt mit dem Trenntransformatorgehäuse (300) elektrisch verbunden ist.

8. System (1000) mit einer Trenntransformatorvorrichtung (100) nach einem der vorherigen Ansprüche und wenigstens einem Netzeingangskabel (500),
wobei das Netzeingangskabel (500) eine Netzeingangskabelabschirmung (510) zur elektrischen Abschirmung des Netzeingangskabels (500) aufweist, bevorzugt einen innen verlaufenden Kabelschirm, wobei das Netzeingangskabel (500) in einem Netzeingangsrohr (520) angeordnet ist, wobei das Netzeingangsrohr (520) eine Netzeingangsrohrabschirmung (530) zur Abschirmung von elektrischen Feldern aus dem Netzeingangskabel (500) aufweist, bevorzugt ein Schirmaußengeflecht, und wobei die Netzeingangskabelabschirmung (510) und die Netzeingangsrohrabschirmung (530) mit einer Außenwand (620) einer transportablen Baueinheit (600) beidseitig elektrisch verbindbar sind.

9. System (1000) nach Anspruch 8, wobei das Netzeingangsrohr (520) ein elektrisch leitendes Wellrohr, bevorzugt Stahlwellrohr, umfasst und wobei das Netzeingangsrohr (520) ein elektrisch nicht leitendes Wellrohr umfasst und/oder wobei das Netzeingangskabel (500) erd- und kurzschlussfest verlegt ist.

10. System (1000) nach einem der Ansprüche 8 und 9, wobei das Netzeingangskabel (500) in das Trenntransformatorgehäuse (300) geführt wird, wobei das Netzeingangskabel (500) direkt mit der Primärverteilung (211) elektrisch verbindbar ist.

11. System (1000) nach einem der Ansprüche 8 bis 10, wobei das System (1000) weiter einen Netzfilter (700) aufweist, wobei die Trenntransformatorvorrichtung (100) mit dem Netzfilter (700) über ein Anschlusskabel verbunden ist, wobei bevorzugt der Netzfilter (700) einen Kombifilter aufweist und/oder eine Dämpfung von mindestens 60 dB in einem Bereich von 100 kHz bis 1 GHz und/oder eine Dämpfung von mindestens 10 dB in einem Bereich von 10 MHz bis 10 GHz bereitstellt.

12. System (1000) nach Anspruch 11, wobei das Anschlusskabel in einem Anschlussrohr angeordnet ist, wobei das Anschlussrohr bevorzugt ein elektrisch nicht leitendes Wellrohr umfasst.

13. System (1000) nach einem der Ansprüche 11 und 12, wobei ein Anschluss der Trenntransformatorvorrichtung (100), bevorzugt der Primärverteilungseinheit (210), für das Netzeingangskabel (500), und ein Anschluss des Netzfilters (700) für das Anschlusskabel identisch ausgestaltet sind und wobei zumindest eine Anschlussseite des Anschlusskabels und zumindest eine Anschlussseite des Netzeingangskabels (500) identisch ausgestaltet sind.

14. Ortsveränderliche transportable Baueinheit (600), insbesondere mobiler Container, mit einer Trenntransformatorvorrichtung (100), wobei die Trenntransformatorvorrichtung (100) nach einem der Ansprüche 1 bis 7 ausgebildet ist.

15. Ortsveränderliche transportable Baueinheit (600) nach Anspruch 14, wobei die Baueinheit (600) einen elektromagnetisch abgeschirmten Bereich (610) aufweist und wobei die Trenntransformatorvorrichtung (100) in dem elektromagnetisch abgeschirmten Bereich (610) angeordnet ist.
